# EUROPEAN PATENT APPLICATION

(11) **EP 4 725 802 A1**
(43) Date of publication of application: **15.04.2026**
(21) Application number: 24205188.6
(22) Date of filing: 08.10.2024
(51) Int. Cl.: B62D 21/02, B62D 21/12, B62D 27/06, B62D 65/02

(54) **KIT OF PARTS FOR SIMPLIFIED ASSEMBLY OF A HEAVY VEHICLE AND ASSEMBLY METHOD**

(71) Applicant: Volvo Truck Corporation, 405 08 Göteborg (SE)
(72) Inventor: RAJANNA, Rajendra, 560085 BENGALURU (IN); AR, Shreeharsha, 417 16 GÖTEBORG (SE); HEDLUND, Lars, 517 37 BOLLEBYGD (SE)
(74) Representative: Kransell & Wennborg KB

(57) **Abstract**

A kit (30) of parts for simplified assembly of a heavy vehicle (1), the kit (30) of parts comprising: a first part (11) including an alignment member (15) pivotable around a pivot axis (19), a circumference of the alignment member (15) around the pivot axis (19) having a first portion (21) with a first surface profile and a second portion (23) with a convex second surface profile; and a second part (12) including an alignment structure (17) having a first portion (25) with a first surface profile being complementary to the first surface profile of the first part (11), and a second portion (27) with a convex second surface profile being arranged and configured to make point contact with the second portion (23) of the alignment member (15), when the first portion (25) of the alignment structure (17) is aligned with the first portion (21) of the alignment member (15).

## Description

### TECHNICAL FIELD

The disclosure relates generally to mechanical assembly. In particular aspects, the disclosure relates to a kit of parts for simplified assembly of a heavy vehicle, and to an assembly method. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Under certain conditions, assembly of two parts may be difficult. For instance, it may be difficult to properly align two parts if a first operator responsible for moving one of the parts towards the other part cannot see the other part. This type of assembly situation may also be ergonomically challenging.

### SUMMARY

According to a first aspect of the disclosure, there is provided a kit of parts for simplified assembly of a heavy vehicle, the kit of parts comprising: a first part including an alignment member pivotable around a pivot axis, a circumference of the alignment member around the pivot axis having a first portion with a first surface profile and a second portion with a convex second surface profile; and a second part including an alignment structure having a first portion with a first surface profile being complementary to the first surface profile of the alignment member of the first part, and a second portion with a convex second surface profile being arranged and configured to make point contact with the second portion of the alignment member of the first part, when the first portion of the alignment structure is aligned with the first portion of the alignment member of the first part. The first aspect of the disclosure may seek to enable an improved assembly of two parts. A technical benefit may include that at least approximate alignment of the first part and the second part can be achieved without a clear line of sight towards the location where the first part and the second part make contact when properly aligned. This may provide for a simplified, faster, and more ergonomic assembly of the first part and the second part, and thus of a vehicle comprising the first part and the second part.

That the first surface profile of the alignment structure of the second part is complementary to the first surface profile of the alignment member of the first part should be understood to mean that these surface profiles can be arranged to make complementary surface contact with each other across substantial portions of the respective surface profiles. If, for example, the first surface profile of one of the first part and the second part is convex with a given curvature, the first surface profile of the other one of the first part and the second part may be concave with the same curvature, so that the first and second surface profiles fit together. A technical effect of this may be that the first profiles of the first and second parts may slide against each other when the first and second parts go from an unaligned state to an aligned state.

The convex configurations of the second profile of the first part and the second profile of the second part may provide for unambiguous alignment, due to the point contact where the second profiles of the first and second parts meet.

That the alignment member is pivotable allows for guided final adjustments without losing the coarse alignment provided by the interaction between the alignment member of the first part and the alignment structure of the second part.

Optionally in some examples, including in at least one preferred example, the first part may include a first hole having a first hole axis, and a second hole having a second hole axis, the first hole axis and the second hole axis being parallel to the pivot axis; and the second part may include a first hole having a first hole axis, and a second hole having a second hole axis parallel to the first hole axis; and the first hole of the first part may align with the first hole of the second part, and the second hole of the first part may align with the second hole of the second part, to allow the first part and the second part to be bolted together, when the first portion of the alignment structure of the second part is aligned with the first portion of the alignment member of the first part and the second portion of the alignment structure of the second part makes point contact with the second portion of the alignment member of the first part. A technical benefit may include that the provision of the first and second holes of the first and second parts allows the first part and the second part to be bolted together when they are aligned. In this context, it should be noted that the first part and the second part may be joined together by other means, such as by welding, snapping, clamping etc.

Optionally in some examples, including in at least one preferred example, at least one of the first hole of the first part and the first hole of the second part may exhibit an oblong cross-section with a plane perpendicular to the first hole axis of the respective first hole; and at least one of the second hole of the first part and the second hole of the second part may exhibit an oblong cross-section with a plane perpendicular to the second hole axis of the respective second hole. A technical benefit may include that the alignment can be made less sensitive to tolerances of the first part and/or the second part.

Optionally in some examples, including in at least one preferred example, the first surface profile of the alignment member of the first part may be a straight line, and the first surface profile of the alignment structure of the second part may be a straight line. A technical benefit may include that surface profiles being straight lines may be relatively easy to manufacture with relatively high precision.

Optionally in some examples, including in at least one preferred example, the convex second surface profile of the alignment member of the first part may be a continuous convex curve, and the convex second surface profile of the alignment structure of the second part may be a continuous convex curve. A technical benefit may include that continuous convex curves allow for smooth sliding point contact between the second surface profiles of the first and second parts, facilitating alignment of the first and second parts.

Optionally in some examples, including in at least one preferred example, the second surface profile of the alignment member of the first part may be a circular arc, and the convex second surface profile of the alignment structure of the second part may be a circular arc. A technical benefit may include that surface profiles being circular arcs may be relatively easy to manufacture with relatively high precision.

Optionally in some examples, including in at least one preferred example, the alignment structure of the second part may be configured to at least partly receive the alignment member of the first part. A technical benefit may include that initial alignment may be simplified, in particular when an operator does not have a clear view of the location where the first part and the second part make initial contact when brought together. For example, the alignment member of the first part may be generally wedge shaped, and the alignment structure of the second part may form an opening configured to at least partly receive the alignment member of the first part.

Optionally in some examples, including in at least one preferred example, the first part may include a limiting structure configured to limit pivoting of the alignment member of the first part to a predefined pivoting range. A technical benefit may include that the pivoting of the alignment member of the first part may assist in final alignment, without making initial alignment of the alignment member of the first part and the alignment structure of the second part unnecessarily challenging.

Optionally in some examples, including in at least one preferred example, the pivoting range may be less than 45°, which may provide the desired compromise between ease of initial and final alignment. In examples, the pivoting range may be smaller, such as less than 30°.

Optionally in some examples, including in at least one preferred example, the first part may be a battery bracket to be arranged on one side of an electric vehicle and the second part may be a cross stay for connecting the battery bracket with a structure on an opposite side of the electric vehicle. The alignment capabilities provided through examples of the present disclosure may be ideal for this application, since the distance from one side of the vehicle to the other side of the vehicle may be relatively long, and the line of sight may be obscured by parts of the vehicle.

Optionally in some examples, including in at least one preferred example, there may be provided an assembly, comprising: a first part including an alignment member pivotable around a pivot axis, a circumference of the alignment member around the pivot axis having a first portion with a first surface profile and a second portion with a convex second surface profile; and a second part including an alignment structure having a first portion with a first surface profile being complementary to the first surface profile of the alignment member of the first part, and a second portion with a convex second surface profile, the first portion of the alignment structure of the second part being aligned with the first portion of the alignment member of the first part, and the second portion of the alignment structure of the second part making point contact with the second portion of the alignment member of the first part.

The assembly according to examples of the present disclosure may advantageously be included in a vehicle.

According to a second aspect of the disclosure, there is provided an assembly method, comprising: providing a first part including an alignment member pivotable around a pivot axis, a circumference of the alignment member around the pivot axis having a first portion with a first surface profile and a second portion with a convex second surface profile; providing a second part including an alignment structure having a first portion with a first surface profile being complementary to the first surface profile of the alignment member of the first part, and a second portion with a convex second surface profile being arranged and configured to make point contact with the second portion of the alignment member of the first part, when the first portion of the alignment structure is aligned with the first portion of the alignment member of the first part; reducing a distance between the first part and the second part in such a way that the alignment member of the first part and the alignment structure of the second part make initial contact; and pushing the first part and the second part together until the first portion of the alignment structure of the second part becomes aligned with the first portion of the alignment member of the first part, and the second portion of the alignment structure of the second part makes point contact with the second portion of the alignment member of the first part. The second aspect of the disclosure may seek to enable an improved assembly of two parts. A technical benefit may include that at least approximate alignment of the first part and the second part can be achieved without a clear line of sight towards the location where the first part and the second part make contact when properly aligned. This may provide for a simplified, faster, and more ergonomic assembly of the first part and the second part, and thus of a vehicle comprising the first part and the second part.

Optionally in some examples, including in at least one preferred example, the assembly method may further comprise: pivoting the second part and the alignment member of the first part together around the pivot axis, until the first part and the second part are aligned with each other. A technical benefit may include to allow for guided final adjustments without losing the coarse alignment provided by the interaction between the alignment member of the first part and the alignment structure of the second part.

Optionally in some examples, including in at least one preferred example, the assembly method may further comprise: joining the first part and the second part together when the first part and the second part are aligned with each other.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1A** is an exemplary vehicle according to an example, in the form of a truck comprising a chassis arrangement.
**FIG. 1B** is a schematic partial view of chassis arrangement in Fig 1A.
**FIG. 2A** is an exemplary assembly according to an example.
**FIG. 2B** is an enlarged view of a portion of the assembly in Fig. 2A.
**FIG. 3** is an exemplary kit of parts according to an example.
**FIG. 4** is an exemplary assembly method according to an example.

### DETAILED DESCRIPTION

The detailed description set forth below provides information and examples of the disclosed technology with sufficient detail to enable those skilled in the art to practice the disclosure.

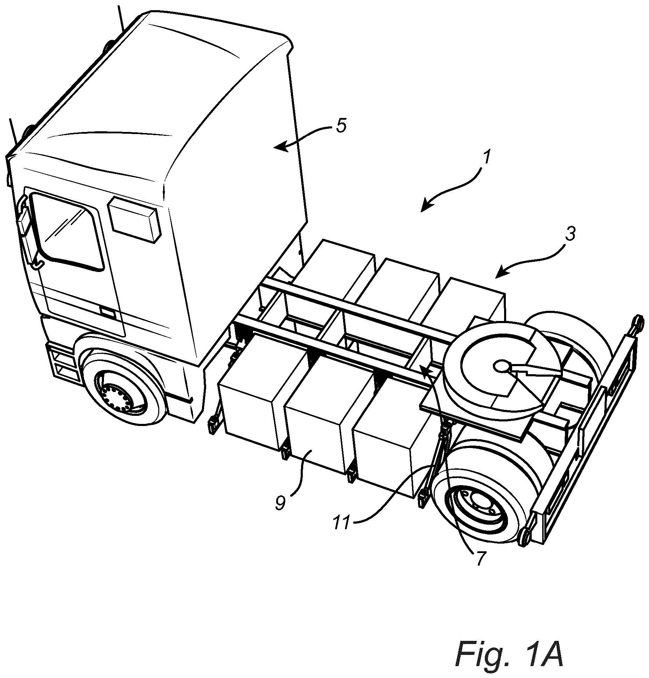

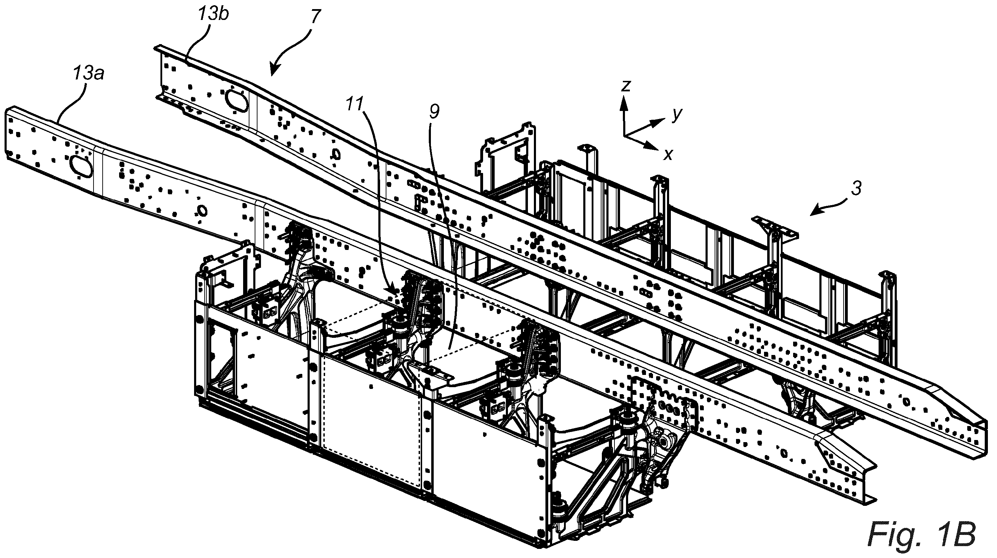

Fig. 1A and Fig. 1B are illustrations intended to illustrate one non-limiting example of a field of use of the kit 30 of parts according to examples of the present disclosure. It should be noted that the kit 30 of parts according to examples of the present disclosure may be useful in other applications, such as in another type of vehicle than that shown in Fig. 1A and Fig. 1B.

Fig. 1A schematically shows an electrified heavy vehicle, here in the form of a truck 1, comprising a chassis arrangement 3 and a vehicle body 5 supported by the chassis arrangement 3. As is schematically indicated in Fig. 1A, the chassis arrangement 3 comprises a chassis frame 7, battery modules 9, and battery module support arrangements 11. Only one of the battery modules and only one of the battery module support arrangements are indicated by reference numerals, to avoid cluttering the drawings.

Fig 1B schematically shows a part of the chassis arrangement 3 in fig 1A, with the battery modules 9 partially removed (no battery cells etc.) to provide a better view of the battery module support arrangements 11. As can be seen in fig 1B, the chassis frame 7 comprises rails 13a-b extending in the longitudinal direction (the X-direction) of the chassis arrangement 3. Each battery module support arrangement 11 is attached to one of the rails 13a-b and one or two battery modules 9. Due to the weight of the battery modules 9, the battery module support arrangements 11 are designed to withstand substantial loads, such as may occur in the X-direction and/or Y-direction in the event of a crash and in the Z-direction during normal operation of the vehicle.

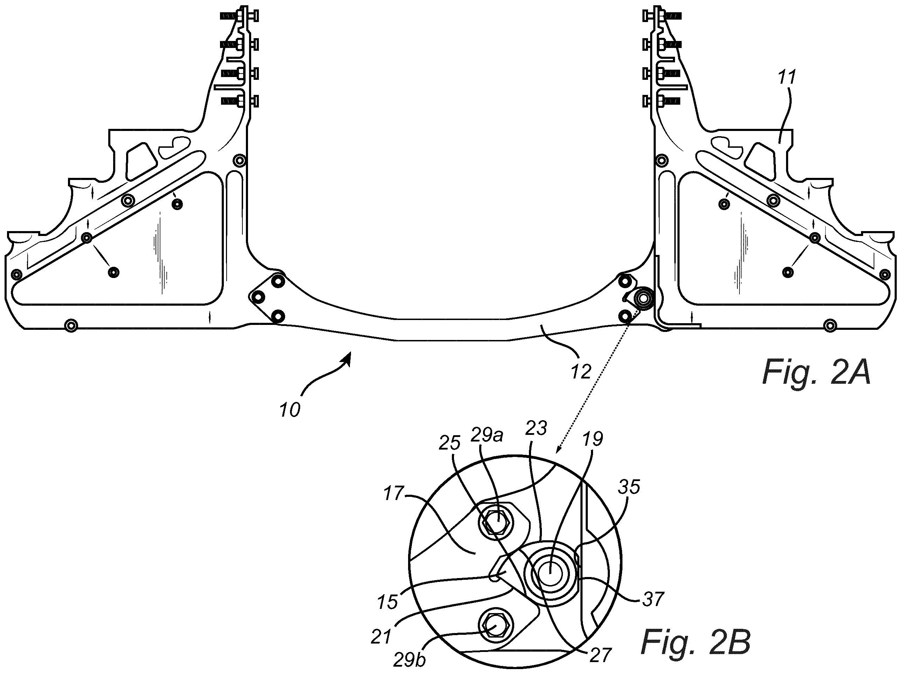

Fig. 2A and Fig. 2B schematically illustrate an exemplary assembly 10 according to an example of the present disclosure, here in the form of a battery assembly, that may be comprised in the chassis arrangement 3 described above with reference to Fig. 1A and
Fig. 1B. The assembly 10 comprises a first part 11, and a second part 12. Referring to the enlarged view in Fig. 2B, the first part 11 comprises an alignment member 15 and the second part 12 comprises an alignment structure 17.

The alignment member 15 is pivotable around a pivot axis 19. A circumference around the pivot axis 19 of the alignment member 15 of the first part 11 has a first portion 21 and a second portion 23. The first portion 21 has a first surface profile. In the example configuration of Fig. 2A and Fig. 2B, the first surface profile of the first portion 21 of the alignment member 15 is a straight line. The second portion 23 of the alignment member 15 has a convex second surface profile. In the example configuration of Fig. 2A and Fig. 2B, the convex second surface profile of the second portion 23 of the alignment member 15 is a continuous convex curve, here in the form of a circular arc. As can also be seen in Fig. 2B, the first part 11 includes a limiting structure 35, configured to limit pivoting of the alignment member 15 of the first part 11 to a predefined pivoting range. In the example configuration of Fig. 2A and Fig. 2B, the pivoting range is limited by the distance between the limiting structure 35 and the straight back edge 37 of the alignment member 15, and the length of the straight back edge 37 of the alignment member 15. The alignment member 15 can pivot around the pivot axis 19 until the alignment member 15 makes contact with the limiting structure 35. Hereby, the alignment member 15 is prevented from hanging down, which makes it easier for the alignment structure 17 of the second part 12 to receive the alignment member 15 of the first part 11 when the first part 11 and the second part 12 approach each other.

Turning now to the second part 12, the alignment structure 17 of the second part 12 has a first portion 25 and a second portion 27. As is schematically illustrated in Fig. 2A and Fig. 2B, the first portion 25 of the alignment structure 17 of the second part 12 has a first surface profile that is complementary to the first surface profile of the first portion 21 of the circumference of the alignment member 15 of the first part 11. In the example configuration of Fig. 2A and Fig. 2B, the first surface profile of the first portion 25 of the alignment structure 17 of the second part 12 is a straight line. The second portion 27 of the alignment structure 17 of the second part 12 has a convex second surface profile. In the example configuration of Fig. 2A and Fig. 2B, the convex second surface profile of the second portion 27 of the alignment structure 17 is a continuous convex curve, here in the form of a circular arc.

In the assembly 10 of Fig. 2A and Fig. 2B, the first portion 25 of the alignment structure 17 of the second part 12 is aligned with the first portion 21 of the alignment member 15 of the first part 11, and the second portion 27 of the alignment structure 17 of the second part 12 makes point contact with the second portion 23 of the alignment member 15 of the first part 11. In their aligned state, the first part 11 and the second part 12 are joined together by fastening members 29a-b, here exemplified by bolts.

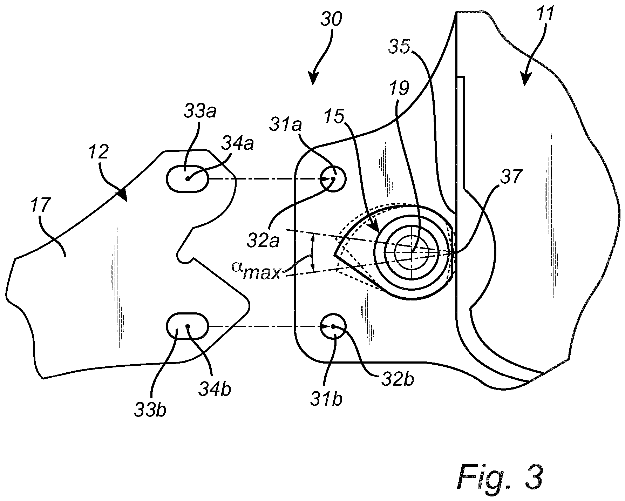

Fig. 3 is an exemplary kit 30 of parts for simplified assembly of a heavy vehicle 1. The kit 30 of parts comprises the first part 11 and the second part 11 described above with reference to Fig. 2A and Fig. 2B. As can be seen in Fig. 3, the first part 11 may comprise a first hole 31a having a first hole axis 32a, and a second hole 31b having a second hole axis 32b. The first hole axis 32a is substantially parallel to the second hole axis 32b, and to the pivot axis 19 of the alignment member 15 of the first part 11. With continued reference to Fig. 3, the second part 12 may comprise a first hole 33a having a first hole axis 34a, and a second hole 33b having a second hole axis 34b. The first hole axis 34a is substantially parallel to the second hole axis 34b. In the example configuration of Fig. 3, the first hole 33a of the second part 12 exhibits an oblong cross-section with a plane perpendicular to the first hole axis 34a of the first hole 33a, and the second hole 33b of the second part 12 exhibits an oblong cross-section with a plane perpendicular to the second hole axis 34b of the second hole 33b. The holes 31a-b of the first part 11 may be oblong instead of, or in addition to, the holes 33a-b of the second part 12. Fig. 3 also illustrates the pivoting range αₘₐₓ described above with reference to Fig. 2A and Fig. 2B.

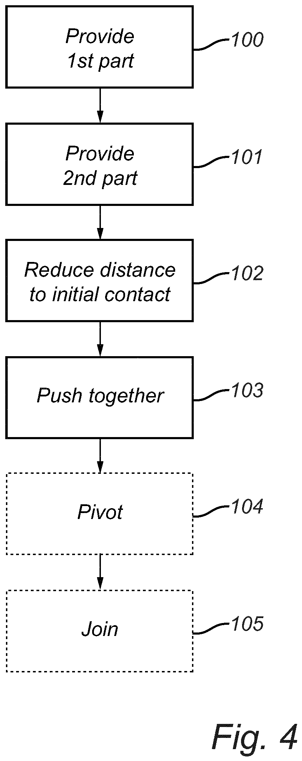

Fig. 4 is an exemplary assembly method according to an example. Referring to the flow-chart in Fig. 4, the method first comprises providing 100 a first part 11 including an alignment member 15 pivotable around a pivot axis 19, a circumference of the alignment member 15 around the pivot axis 19 having a first portion 21 with a first surface profile and a second portion 23 with a convex second surface profile.

It is also included in the method to provide 101 a second part 12 including an alignment structure 17 having a first portion 25 with a first surface profile being complementary to the first surface profile of the alignment member 15 of the first part 11, and a second portion 27 with a convex second surface profile being arranged and configured to make point contact with the second portion 23 of the alignment member 15 of the first part 11, when the first portion 25 of the alignment structure 17 is aligned with the first portion 21 of the alignment member 15 of the first part 11.

A distance between the first part 11 and the second part 12 is reduced 102 in such a way that the alignment member 15 of the first part 11 and the alignment structure 17 of the second part 12 make initial contact, and the first part 11 and the second part 12 are pushed 103 together until the first portion 25 of the alignment structure 17 of the second part 12 becomes aligned with the first portion 21 of the alignment member 15 of the first part 11, and the second portion 27 of the alignment structure 17 of the second part 12 makes point contact with the second portion 23 of the alignment member 15 of the first part 11.

Optionally, as is indicated in the flow-chart of Fig. 4 by dashed boxes, the method may further comprise pivoting 104 the second part 12 and the alignment member 15 of the first part 11 together around the pivot axis 19, until the first part 11 and the second part 12 are aligned with each other, and joining 105 the first part 11 and the second part 12 together when the first part 11 and the second part 12 are aligned with each other.

Example 1:A kit of parts for simplified assembly of a heavy vehicle, the kit of parts comprising: a first part including an alignment member pivotable around a pivot axis, a circumference of the alignment member around the pivot axis having a first portion with a first surface profile and a second portion with a convex second surface profile; and a second part including an alignment structure having a first portion with a first surface profile being complementary to the first surface profile of the alignment member of the first part, and a second portion with a convex second surface profile being arranged and configured to make point contact with the second portion of the alignment member of the first part, when the first portion of the alignment structure of the second part is aligned with the first portion of the alignment member of the first part.

Example 2: The kit of parts of example 1, wherein the first surface profile of the alignment structure of the second part and the first surface profile of the alignment member of the first part are configured to make complementary surface contact with each other across substantial portions of the respective surface profiles.

Example 3: The kit of parts of example 1, wherein: the first part includes: a first hole having a first hole axis, and a second hole having a second hole axis, the first hole axis and the second hole axis being parallel to the pivot axis; and the second part includes: a first hole having a first hole axis, and a second hole having a second hole axis parallel to the first hole axis; and the first hole of the first part aligns with the first hole of the second part, and the second hole of the first part aligns with the second hole of the second part, to allow the first part and the second part to be bolted together, when the first portion of the alignment structure is aligned with the first portion of the alignment member of the first part.

Example 4: The kit of parts of example 3, wherein: at least one of the first hole of the first part and the first hole of the second part exhibits an oblong cross-section with a plane perpendicular to the first hole axis of the respective first hole; and at least one of the second hole of the first part and the second hole of the second part exhibits an oblong cross-section with a plane perpendicular to the second hole axis of the respective second hole.

Example 5: The kit of parts of example 1, wherein the first surface profile of the alignment member of the first part is a straight line, and the first surface profile of the alignment structure of the second part is a straight line.

Example 6: The kit of parts of example 1, wherein the convex second surface profile of the alignment member of the first part is a continuous convex curve, and the convex second surface profile of the alignment structure of the second part is a continuous convex curve.

Example 7: The kit of parts of example 6, wherein the second surface profile of the alignment member of the first part is a circular arc, and the convex second surface profile of the alignment structure of the second part is a circular arc.

Example 8: The kit of parts of example 1, wherein the alignment structure of the second part is configured to at least partly receive the alignment member of the first part.

Example 9: The kit of parts of example 1, wherein the first part includes a limiting structure configured to limit pivoting of the alignment member of the first part to a predefined pivoting range.

Example 10: The kit of parts of example 9, wherein the pivoting range is less than 45°.

Example 11: The kit of parts of example 1, wherein the first part is a battery bracket to be arranged on one side of an electric vehicle and the second part is a cross stay for connecting the battery bracket with a structure on an opposite side of the electric vehicle.

Example 12: An assembly, comprising: a first part including an alignment member pivotable around a pivot axis, a circumference of the alignment member around the pivot axis having a first portion with a first surface profile and a second portion with a convex second surface profile; and a second part including an alignment structure having a first portion with a first surface profile being complementary to the first surface profile of the alignment member of the first part, and a second portion with a convex second surface profile, the first portion of the alignment structure of the second part being aligned with the first portion of the alignment member of the first part, and the second portion of the alignment structure of the second part making point contact with the second portion of the alignment member of the first part.

Example 13: A vehicle, comprising the assembly of example 12.

Example 14: An assembly method, comprising: providing a first part including an alignment member pivotable around a pivot axis, a circumference of the alignment member around the pivot axis having a first portion with a first surface profile and a second portion with a convex second surface profile; providing a second part including an alignment structure having a first portion with a first surface profile being complementary to the first surface profile of the alignment member of the first part, and a second portion with a convex second surface profile being arranged and configured to make point contact with the second portion of the alignment member of the first part, when the first portion of the alignment structure is aligned with the first portion of the alignment member of the first part; reducing a distance between the first part and the second part in such a way that the alignment member of the first part and the alignment structure of the second part make initial contact; and pushing the first part and the second part together until the first portion of the alignment structure of the second part becomes aligned with the first portion of the alignment member of the first part, and the second portion of the alignment structure of the second part makes point contact with the second portion of the alignment member of the first part.

Example 15: The assembly method of example 14, wherein the alignment structure of the second part at least partly receives the alignment member of the first part.

Example 16: The assembly method of example 14, further comprising: pivoting the second part and the alignment member of the first part together around the pivot axis, until the first part and the second part are aligned with each other.

Example 17: The assembly method of example 16, further comprising: joining the first part and the second part together when the first part and the second part are aligned with each other.

Example 18: The assembly method of example 16, wherein the first part includes at least one hole and the second part includes at least one hole, wherein the first part and the second part are aligned with each other when the at least one hole of the first part and the at least one hole of the second part are aligned with each other.

Example 19: The assembly method of example 18, wherein first part includes at least two holes and the second part includes at least two holes, wherein the first part and the second part are aligned with each other when the at least two holes of the first part and the at least two holes of the second part are aligned with each other.

Example 20: The assembly method of example 18, further comprising: joining the first part and the second part together by bolts when the first part and the second part are aligned with each other.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A kit (30) of parts for simplified assembly of a heavy vehicle (1), the kit (30) of parts comprising:
a first part (11) including an alignment member (15) pivotable around a pivot axis (19), a circumference of the alignment member (15) around the pivot axis (19) having a first portion (21) with a first surface profile and a second portion (23) with a convex second surface profile; and
a second part (12) including an alignment structure (17) having a first portion (25) with a first surface profile being complementary to the first surface profile of the alignment member (15) of the first part (11), and a second portion (27) with a convex second surface profile being arranged and configured to make point contact with the second portion (23) of the alignment member (15) of the first part (11), when the first portion (25) of the alignment structure (17) of the second part (12) is aligned with the first portion (21) of the alignment member (15) of the first part (11).

2. The kit (30) of parts of claim 1, wherein:
the first part (11) includes:
a first hole (31a) having a first hole axis, and a second hole (31b) having a second hole axis, the first hole axis and the second hole axis being parallel to the pivot axis (19); and
the second part (12) includes:
a first hole (33a) having a first hole axis, and a second hole (33b) having a second hole axis parallel to the first hole axis; and
the first hole (31a) of the first part (11) aligns with the first hole (33a) of the second part (12), and the second hole (31b) of the first part (11) aligns with the second hole (33b) of the second part (12), to allow the first part (11) and the second part (12) to be bolted together, when the first portion (25) of the alignment structure (17) is aligned with the first portion (21) of the alignment member (15) of the first part (11).

3. The kit (30) of parts of claim 2, wherein:
at least one of the first hole (31a) of the first part (11) and the first hole (33a) of the second part (12) exhibits an oblong cross-section with a plane perpendicular to the first hole axis of the respective first hole; and
at least one of the second hole (31b) of the first part (11) and the second hole (33b) of the second part (12) exhibits an oblong cross-section with a plane perpendicular to the second hole axis of the respective second hole.

4. The kit (30) of parts of any of claims 1-3, wherein the first surface profile of the alignment member (15) of the first part (11) is a straight line, and the first surface profile of the alignment structure (17) of the second part (12) is a straight line.

5. The kit (30) of parts of any of claims 1-4, wherein the convex second surface profile of the alignment member (15) of the first part (11) is a continuous convex curve, and the convex second surface profile of the alignment structure (17) of the second part (12) is a continuous convex curve.

6. The kit (30) of parts of claim 5, wherein the second surface profile of the alignment member (15) of the first part (11) is a circular arc, and the convex second surface profile of the alignment structure (17) of the second part (12) is a circular arc.

7. The kit (30) of parts of any of claims 1-6, wherein the alignment structure (17) of the second part (12) is configured to at least partly receive the alignment member (15) of the first part (11).

8. The kit (30) of parts of any of claims 1-7, wherein the first part (11) includes a limiting structure (35) configured to limit pivoting of the alignment member (15) of the first part (11) to a predefined pivoting range.

9. The kit (30) of parts of claim 8, wherein the pivoting range is less than 45°.

10. The kit (30) of parts of any of claims 1-9, wherein the first part (11) is a battery bracket to be arranged on one side of an electric vehicle (1) and the second part (12) is a cross stay for connecting the battery bracket (11) with a structure on an opposite side of the electric vehicle (1).

11. An assembly (10), comprising:
a first part (11) including an alignment member (15) pivotable around a pivot axis (19), a circumference of the alignment member (15) around the pivot axis (19) having a first portion (21) with a first surface profile and a second portion (23) with a convex second surface profile; and
a second part (12) including an alignment structure (17) having a first portion (25) with a first surface profile being complementary to the first surface profile of the alignment member (15) of the first part (11), and a second portion (27) with a convex second surface profile,
the first portion (25) of the alignment structure (17) of the second part (12) being aligned with the first portion (21) of the alignment member (15) of the first part (11), and the second portion (27) of the alignment structure (17) of the second part (12) making point contact with the second portion (23) of the alignment member (15) of the first part (11).

12. A vehicle (1), comprising the assembly (10) of claim 11.

13. An assembly method, comprising:
providing (100) a first part (11) including an alignment member (15) pivotable around a pivot axis (19), a circumference of the alignment member (15) around the pivot axis (19) having a first portion (21) with a first surface profile and a second portion (23) with a convex second surface profile;
providing (101) a second part (12) including an alignment structure (17) having a first portion (25) with a first surface profile being complementary to the first surface profile of the alignment member (15) of the first part (11), and a second portion (27) with a convex second surface profile being arranged and configured to make point contact with the second portion (23) of the alignment member (15) of the first part (11), when the first portion (25) of the alignment structure (17) is aligned with the first portion (21) of the alignment member (15) of the first part (11);
reducing (102) a distance between the first part (11) and the second part (12) in such a way that the alignment member (15) of the first part (11) and the alignment structure (17) of the second part (12) make initial contact; and
pushing (103) the first part (11) and the second part (12) together until the first portion (25) of the alignment structure (17) of the second part (12) becomes aligned with the first portion (21) of the alignment member (15) of the first part (11), and the second portion (27) of the alignment structure (17) of the second part (12) makes point contact with the second portion (23) of the alignment member (15) of the first part (11).

14. The assembly method of claim 13, further comprising:
pivoting (104) the second part (12) and the alignment member (15) of the first part (11) together around the pivot axis (19), until the first part (11) and the second part (12) are aligned with each other.

15. The assembly method of claim 14, further comprising:
joining (105) the first part (11) and the second part (12) together when the first part (11) and the second part (12) are aligned with each other.
